# EUROPÄISCHE PATENTSCHRIFT

(11) **EP 1 997 722 B1**
(45) Veröffentlichungstag und Bekanntmachung des Hinweises auf die Patenterteilung: **20.04.2011**
(21) Anmeldenummer: 08002098.5
(22) Anmeldetag: 05.02.2008
(51) Int. Cl.: B62D 35/02

(54) **Vorrichtung und Verfahren zum Befestigen, Verspannen oder Justieren eines Verkleidungsteils an einem karosseriefesten Teil eines Fahrzeugs**
Device and method to attach, brace and adjust a trim panel on the bodywork of a vehicle
Dispositif et procédé pour fixer, haubaner et ajuster un élément de revêtement sur la carrosserie d'un véhicule automobile

(30) Priorität: 26.05.2007 DE 102007024658
(43) Veröffentlichungstag der Anmeldung: 03.12.2008
(73) Patentinhaber: Dr. Ing. h.c. F. Porsche AG, 70435 Stuttgart (DE)
(72) Erfinder: Erb, Thiemo Adolf, 70182 Stuttgart (DE); Schwan, Norbert, 71277 Rutesheim (DE); Habrik, Ralf, 74629 Pfedelbach-Untersteinbach (DE)

(56) Entgegenhaltungen:
- EP-A- 0 030 122
- WO-A-96/29483
- GB-A- 2 260 961
- SHAHMANESH N: "FASTENING SOLUTIONS FOR AUTOMOTIVE UNDERBODY SHIELDS" AUTOMOTIVE ENGINEER, PROFESSIONAL ENGINEERING PUBLISHING, LONDON, GB, Bd. 28, Nr. 4, 1. April 2003 (2003-04-01), Seite 48, XP001159250 ISSN: 0307-6490

## Beschreibung

Die Erfindung betrifft eine Vorrichtung sowie ein Verfahren zum Befestigen, Verspannen oder Justieren eines Verkleidungsteils an einem karosseriefesten Teil.

Aus dem Serienfahrzeugbau ist bekannt, dass beispielsweise eine Unterbodenverkleidung an der Bodentragstruktur befestigt wird. Dabei ist es insbesondere bei Sportwagen oder Rennwagen wichtig, dass die Unterbodenverkleidung durch auftretende Windkräfte nicht von der Bodentragstruktur wegbewegt wird. Dies wird in der Regel dadurch erreicht, dass Spannelemente vorgesehen sind, die die Unterbodenverkleidung in Bezug auf die Bodentragstruktur hin verspannen.

Aus der WO 96/029483 sind Zugestreben aus faserverstärktem Kunststoff bekannt, die zum Einleiten einer Zug-Kraft-Komponente mindestens ein schlaufenartiges Verankerungs- bzw. Zugelement umfassen.

Die GB 2 260 961 A offenbart eine Vorrichtung, die geeignet ist für das Befestigen, Verspannen oder Justieren eines Verkleidungsteils zu einem karosseriefesten Teil, das als Spannelement ausgebildet ist. Das Spannelement besteht aus einem länglichen Element aus faserverstärktem Kunststoff und kann über eine Abspannvorrichtung zwischen zwei Endlagen verstellt werden.

Die Aufgabe der Erfindung besteht darin, eine Vorrichtung und ein Verfahren zum Befestigen, Verspannen oder Justieren eines Verkleidungsteils zu einem karosseriefesten Teil zu schaffen, die hohe Zugkräfte aufnimmt und gleichzeitig ein Nachjustieren des Verkleidungsteils gegenüber dem karosseriefesten Teil ermöglicht.

Diese Aufgabe wird erfindungsgemäß mit den Merkmalen der unabhängigen Patentansprüche gelöst.

Vorteilhafte Ausgestaltungen ergeben sich aus den Merkmalen der Unteransprüche.

Mit einem länglichen Element aus faserverstärktem Kunststoff wird erreicht, dass hohe Zugkräfte insbesondere bei hohen Geschwindigkeiten aufgenommen werden können. Gleichzeitig ermöglicht eine in das Spannelement integrierte Längenausgleichsvorrichtung eine Einstellung der Länge des Spannelements, wodurch sich das Verkleidungsteil stets gegenüber dem karosseriefesten Teil nachjustieren lässt. Die bei hohen Geschwindigkeiten auftretenden Kräfte können durch die länglichen Elemente aus Faserverbundstoff aufgenommen und in die Bodentragstruktur weiter geleitet werden.

Weitere vorteilhafte Ausgestaltungen der Erfindung werden im Folgenden anhand der Zeichnung näher erläutert. Dabei zeigen:
- Fig. 1: eine perspektivische Ansicht einer Bodenstruktur eines Kraftfahrzeugs mit einem erfindungsgemäßen Spannelement,
- Fig. 2: das Spannelement gemäß Fig. 1 in einer Einzeldarstellung,
- Fig. 3: eine vergrößerte Darstellung des Spannelements gemäß Fig. 2 in einer modifizierten Ausführungsform sowie
- Fig. 4: ein Spannelement in einer zweiten Ausgestaltungsform.

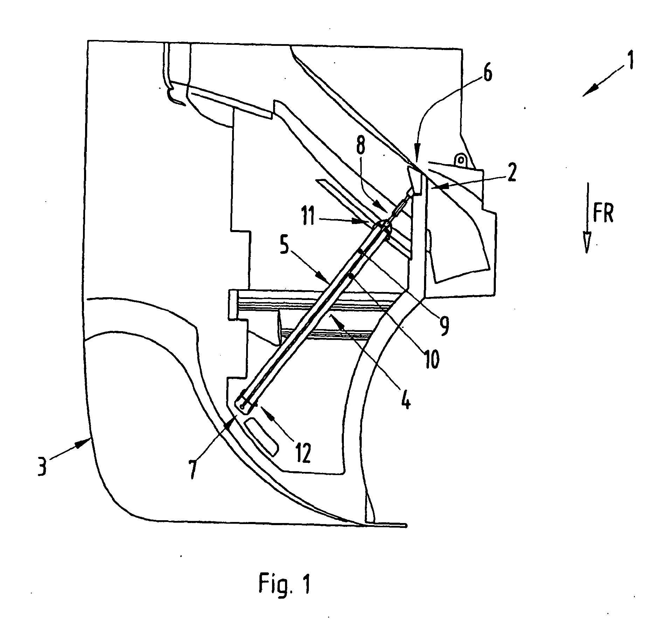

In Fig. 1 ist eine Bodenstruktur 1 eines nicht näher dargestellten Kraftfahrzeugs in einer perspektivischen Ansicht schräg von oben dargestellt. Die Fahrtrichtung ist mit einem Pfeil FR gekennzeichnet. Die Bodenstruktur 1 umfasst eine Tragstruktur, die in dieser Darstellung als ein Längsträger 2 dargestellt ist. Zur Fahrbahn hin wird die Bodenstruktur 1 mit einer Unterbodenverkleidung 3 abgedeckt, die an der Tragstruktur, insbesondere eben an dem Längsträger 2, gehalten ist. Damit bei hohen Geschwindigkeiten die Unterbodenverkleidung 3 nicht aufgrund des ansteigenden Unterdrucks von der Tragstruktur weggezogen wird, besteht die Anforderung an eine stabile Befestigung zwischen der Unterbodenverkleidung 3 und der Tragstruktur. Insbesondere ist dabei wichtig, dass diese Befestigung immer wieder nachjustierbar ist. Realisiert wird dies über eine Zugestrebe 4, die als Spannelement 5 ausgebildet ist.

Das Spannelement 5 umfasst zwei Anbindungselemente 6 und 7, wobei das dem Längsträger 2 zugeordnete Anbindungselement am Längsträger 2 befestigt und das der Unterbodenverkleidung 3 zugeordnete Anbindungselement 7 an dem Unterboden 3 befestigt ist.

Des Weiteren umfasst das Spannelement 5 eine Abspanneinrichtung 8. Zwischen den Anbindungselementen 6 und 7 erstrecken sich zwei CFK-Bänder 9 und 10, die jeweils an Umlenkungsstellen 11 und 12 umgelenkt werden, so dass die CFK-Bänder doppellagig umlaufend, d.h. als Schlaufe, ausgebildet sind.

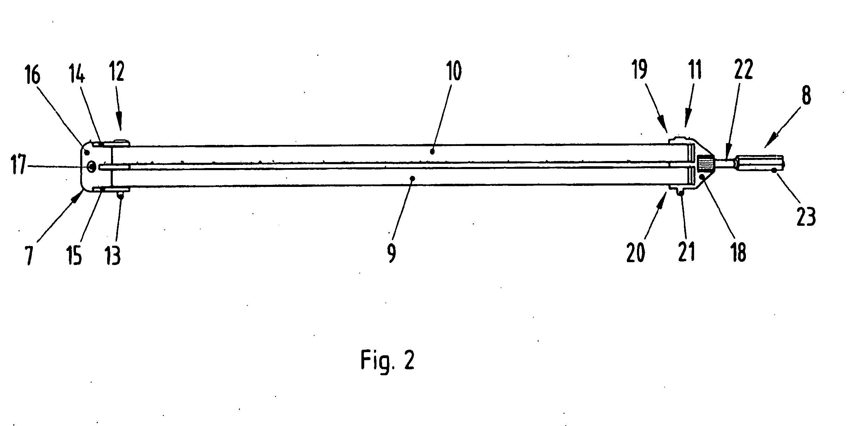

Wie aus der Detaildarstellung in Fig. 2 hervorgeht, ist die Umlenkstelle 12 dazu an dem Anbindungselement 7 mit einem Umlenkbolzen 13 ausgestattet, der in Lageraufnahmen 14 und 15 gehalten ist. Die CFK-Bänder 9 und 10 liegen am Umfang des Umlenkbolzen 13 zumindest teilweise an. Die Lageraufnahmen 14 und 15 stehen im rechten Winkel von einer Bodenplatte 16 ab, die ihrerseits mittels Schraubverbindung 17 an der Unterbodenverkleidung 3 verankert wird. Die gegenüberliegende Umlenkstelle 11 ist als gabelförmige Aufnahme 18 mit zwei Gabeln 19 und 20 ausgebildet. Die Gabeln 19, 20 nehmen einen Umlenkbolzen 21 auf, um den wiederum die CFK-Bänder 9 und 10 geführt sind.

Eine Besonderheit ist, dass die CFK-Bänder 9 und 10 starr bzw. als Formteil, also aus Laminat ausgeführt und damit nicht flexibel sind.

Zwischen der gabelförmigen Aufnahme 18 und dem Anbindungselement ist die Abspanneinrichtung 8 angeordnet. Sie umfasst eine Gewindestange 22, die einerseits an der Aufnahme 18 befestigt und andererseits in einer Gewindehülse 23 geführt ist. Die Gewindehülse 23 wirkt mit einer Gewindestange 24 zusammen, die am gegenüberliegenden Ende an dem Anbindungselement 6 fixiert ist. Durch Drehen der Gewindehülse 23 kann die wirksame Länge des Spannelements 5 verkürzt werden, so dass die Unterbodenverkleidung 3 an die Tragstruktur, insbesondere an den Längsträger 2, herangezogen wird.

Unter Verwendung mehrerer solcher Spannelemente über die gesamte Bodenstruktur kann die Unterbodenverkleidung 3 optimal verspannt werden. Toleranzen werden ausgeglichen. Kräfte, die durch ansteigenden Unterdruck entstehen, werden von den als Zugstreben wirkenden Spannelementen aufgenommen.

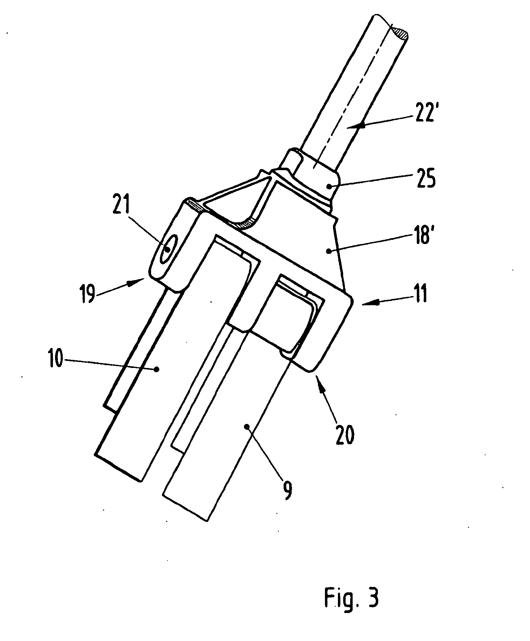

Fig. 3 zeigt eine gabelförmige Aufnahme 18' in einer modifizierten Ausgestaltungsform zu der in Fig. 1 und 2 beschriebenen Aufnahme 18. Hier ist die Gewindestange 22' in die Aufnahme 18' eingeschraubt und über eine Kontermutter 25 gesichert. Die Längeneinstellung erfolgt über ein mehr oder weniger weites Eindrehen der Gewindestange in die Kontermutter 25.

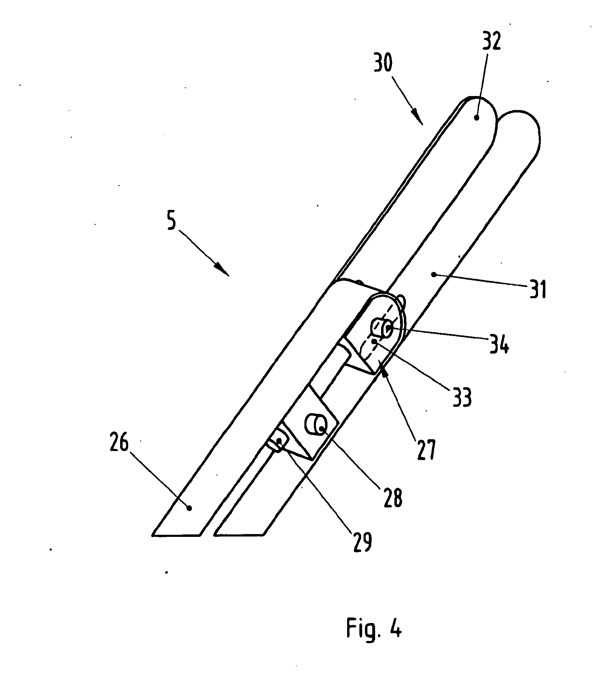

Eine zweite Ausführungsform der Erfindung zeigt Fig. 4. Das Spannelement 5 umfasst lediglich ein CFK-Band 26, das um eine Umlenkung 27 geführt ist. Der Umlenkung 27 gegenüberliegend ist ein Befestigungsbolzen 28 angeordnet, der über eine Gewindestange 29 mit der Umlenkung 27 verbunden ist. Der Befestigungsbolzen 28 ist fest mit einem Gabelträger 30 verbunden, dessen beide Gabeln 31 und 32 an dem Längsträger 2 befestigt ist. In den Gabeln 31, 32 ist jeweils ein Langloch 33 eingebracht, in das ein von der Umlenkung 27 abstehender Bolzen 34 eingreift.

Durch die Gewindestange 29 ist der Abstand zwischen der Umlenkung 27 und dem Befestigungsbolzen 28 einstellbar, so dass sich ein Längenausgleich ergibt, der der Länge des Langlochs 33 entspricht.

Es versteht sich von selbst, dass die CFK-Bänder nicht doppellagig ausgeführt sein müssen, sondern über entsprechende Befestigungen an der Aufnahme 18 oder an dem Anbindungselement 7 befestigt sein können.

## Patentansprüche

1. Vorrichtung zum Befestigen, Verspannen oder Justieren eines Verkleidungsteils, insbesondere einer Unterbodenverkleidung (3), zu einem karosseriefesten Teil, insbesondere einem Längsträger (2), mittels mindestens einem als Zugstrebe ausgebildeten und mit einem Anbindungselement (6) versehenen Spannelement (5), das mit dem Anbindungselement (6) an dem karosseriefesten Teil befestigbar ist, welches zumindest ein längliches Element aus faserverstärktem Kunststoff umfasst, wobei die Länge des Spannelements (5) über eine Abspanneinrichtung (8) zwischen zwei Endlagen einstellbar ist, **dadurch gekennzeichnet, dass** die Abspanneinrichtung (8) eine Relativbewegung zwischen einer Umlenkstelle (11, 12, 27) und dem Anbindungselement (6) bewirkt, wobei das längliche Element ein CFK-Band (9, 10) ist, das doppellagig umlaufend ausgebildet ist, und das an Umlenkstellen umgelenkt ist.

2. Vorrichtung nach Anspruch 1, **dadurch gekennzeichnet, dass** das Spannelement (5) zwei Anbindungselemente (6, 7) umfasst.

3. Vorrichtung nach Anspruch 1 oder 2, **dadurch gekennzeichnet, dass** das CFK-Band (9, 10) starr aus Laminat ausgeführt ist.

4. Vorrichtung nach Anspruch 3, **dadurch gekennzeichnet, dass** das CFK-Band (9, 10) an Umlenkstellen (11, 12, 27) umgelenkt ist, wobei die Umlenkstelle (11, 12) durch eine gabelförmige Aufnahme (18) gebildet ist.

5. Vorrichtung nach Anspruch 3, **dadurch gekennzeichnet, dass** das CFK-Band (9, 10) an Umlenkstellen (11, 12, 27) umgelenkt ist, wobei die Umlenkstelle (27) durch einen mit der Umlenkung verbundenen Befestigungsbolzen (28) gebildet ist.

6. Spannelement für eine Vorrichtung zum Befestigen, Verspannen oder Justieren eines Verkleidungsteils, insbesondere einer Unterbodenverkleidung (3), zu einem karosseriefesten Teil, insbesondere einem Längsträger (2), mittels mindestens einem als Zugstrebe ausgebildeten und mit einem Anbindungselement (6) versehenen Spannelement (5), das mit dem Anbindungselement (6) an dem karosseriefesten Teil befestigbar ist, und welches zumindest ein längliches Element aus faserverstärktem Kunststoff umfasst, wobei die Länge des Spannelements (5) über eine Abspanneinrichtung (8) zwischen zwei Endlagen einstellbar ist, **dadurch gekennzeichnet, dass** die Abspanneinrichtung (8) eine Relativbewegung zwischen einer Umlenkstelle (11, 12, 27) und dem Anbindungselement (6) bewirkt, wobei das längliche Element ein CFK-Band (9, 10) ist, das doppellagig umlaufend ausgebildet ist und das an Umlenkstellen umgelenkt ist.

7. Verfahren zum Befestigen, Verspannen oder Justieren eines Verkleidungsteils, insbesondere einer Unterbodenverkleidung (3), zu einem karosseriefesten Teil, insbesondere einem Längsträger (2), mittels mehreren als Zugstrebe ausgebildeten und mit Anbindungselementen (6) versehenen Spannelementen (5), die mit dem Anbindungselement (6) an dem karosseriefesten Teil befestigbar sind, und die jeweils mit einem Anbindungselement (6) an dem fahrzeugfesten Teil, insbesondere dem Längsträger (2), und mit einem anderen Anbindungselement (7) an dem Verkleidungsteil, insbesondere an der Bodenverkleidung (3), befestigt werden, und deren Länge über eine Abspanneinrichtung zwischen zwei Endlagen eingestellt werden, und das an Umlenkstellen umgelenkt ist, um eine Relativbewegung zwischen jeder Umlenkstelle (11, 12, 27) und dem Anbindungselement (6) zu bewirken.

## Claims

1. Device for attaching, bracing or adjusting a trim panel, in particular an underbody panel (3), with respect to a part mounted on the bodywork, in particular a longitudinal member (2), by means of at least one tensioning element (5) which is designed as a tension strut and is provided with a joining element (6) and can be attached by the joining element (6) to the part mounted on the bodywork, and which comprises at least one elongate element made of fibre-reinforced plastic, wherein the length of the tensioning element (5) can be adjusted between two end positions via a bracing device (8), **characterized in that** the bracing device (8) brings about a relative movement between a deflecting point (11, 12, 27) and the joining element (6), the elongate element being a CFRP strap (9, 10) which is designed to revolve as a double layer and which is deflected at deflecting points.

2. Device according to Claim 1, **characterized in that** the tensioning element (5) comprises two joining elements (6, 7).

3. Device according to Claim 1 or 2, **characterized in that** the CFRP strap (9, 10) is formed rigidly from laminate.

4. Device according to Claim 3, **characterized in that** the CFRP strap (9, 10) is deflected at deflecting points (11, 12, 27), the deflecting point (11, 12) being formed by a fork-shaped receptacle (18).

5. Device according to Claim 3, **characterized in that** the CFRP strap (9, 10) is deflected at deflecting points (11, 12, 27), the deflecting point (27) being formed by an attachment bolt (28) connected to the deflecting means.

6. Tensioning element for a device for attaching, bracing or adjusting a trim panel, in particular an underbody panel (3), with respect to a part mounted on the bodywork, in particular a longitudinal member (2), by means of at least one tensioning element (5) which is designed as a tension strut and is provided with a joining element (6) and can be attached by the joining element (6) to the part mounted on the bodywork, and which comprises at least one elongate element made of fibre-reinforced plastic, wherein the length of the tensioning element (5) can be adjusted between two end positions via a bracing device (8), **characterized in that** the bracing device (8) brings about a relative movement between a deflecting point (11, 12, 27) and the joining element (6), the elongate element being a CFRP strap (9, 10) which is designed to revolve as a double layer and which is deflected at deflecting points.

7. Method for attaching, bracing or adjusting a trim panel, in particular an underbody panel (3), with respect to a part mounted on the bodywork, in particular a longitudinal member (2), by means of a plurality of tensioning elements (5) which are designed as tension struts and are provided with joining elements (6) and can be attached by the joining element (6) to the part mounted on the bodywork, and which are each attached by one joining element (6) to the part mounted on the vehicle, in particular to the longitudinal member (2), and by another joining element (7) to the trim panel, in particular to the underbody panel (3), and the lengths of which tensioning elements are adjusted between two end positions via a bracing device, and which are deflected at deflecting points in order to bring about a relative movement between each deflecting point (11, 12, 27) and the joining element (6).

## Revendications

1. Dispositif pour fixer, serrer ou ajuster une pièce de revêtement, en particulier un revêtement de caisse (3), à une pièce fixe de la carrosserie, en particulier un support longitudinal (2), au moyen d'au moins un élément de serrage (5) réalisé sous forme de tirant et pourvu d'un élément de liaison (6), qui peut être fixé à l'élément de liaison (6) sur la pièce fixe de la carrosserie, qui comprend au moins un élément allongé en plastique renforcé par des fibres, la longueur de l'élément de serrage (5) pouvant être ajustée par le biais d'un dispositif de tensionnement (8) entre deux positions d'extrémité, **caractérisé en ce que** le dispositif de tensionnement (8) provoque un déplacement relatif entre un point de déflexion (11, 12, 27) et l'élément de liaison (6), l'élément allongé étant une bande de plastique renforcé par des fibres de carbone (9, 10), qui est réalisée de manière continue sur deux couches, et qui est déviée aux points de déflexion.

2. Dispositif selon la revendication 1, **caractérisé en ce que** l'élément de serrage (5) comprend deux éléments de liaison (6, 7).

3. Dispositif selon la revendication 1 ou 2, **caractérisé en ce que** la bande de plastique renforcé par des fibres de carbone (9, 10) est réalisée sous forme rigide à partir de matériau stratifié.

4. Dispositif selon la revendication 3, **caractérisé en ce que** la bande de plastique renforcé par des fibres de carbone (9, 10) est déviée aux points de déflexion (11, 12, 27), les points de déflexion (11, 12) étant formés par un logement (18) en forme de fourche.

5. Dispositif selon la revendication 3, **caractérisé en ce que** la bande de plastique renforcé par des fibres de carbone (9, 10) est déviée aux points de déflexion (11, 12, 27), le point de déflexion (27) étant formé par un boulon de fixation (28) connecté à la déviation.

6. Elément de serrage pour un dispositif pour fixer, serrer ou ajuster une pièce de revêtement, en particulier un revêtement de caisse (3), à une pièce fixe de la carrosserie, en particulier un support longitudinal (2), au moyen d'au moins un élément de serrage (5) réalisé sous forme de tirant et pourvu d'un élément de liaison (6), qui peut être fixé à l'élément de liaison (6) sur la pièce fixe de la carrosserie, qui comprend au moins un élément allongé en plastique renforcé par des fibres, la longueur de l'élément de serrage (5) pouvant être ajustée par le biais d'un dispositif de tensionnement (8) entre deux positions d'extrémité, **caractérisé en ce que** le dispositif de tensionnement (8) provoque un déplacement relatif entre un point de déflexion (11, 12, 27) et l'élément de liaison (6), l'élément allongé étant une bande de plastique renforcé par des fibres de carbone (9, 10), qui est réalisée de manière continue sur deux couches, et qui est déviée aux points de déflexion.

7. Procédé pour un dispositif pour fixer, serrer ou ajuster une pièce de revêtement, en particulier un revêtement de caisse (3), à une pièce fixe de la carrosserie, en particulier un support longitudinal (2), au moyen de plusieurs éléments de serrage (5) réalisés sous forme de tirants et pourvus d'éléments de liaison (6), qui peuvent être fixés aux éléments de liaison (6) sur la pièce fixe de la carrosserie, et qui sont fixés à chaque fois par un élément de liaison (6) à la pièce fixe du véhicule, en particulier le support longitudinal (2), et par un autre élément de liaison (7) à la partie de revêtement, en particulier le revêtement de caisse (3), et dont la longueur est ajustée par le biais d'un dispositif de serrage entre deux positions de fin de course, et qui est dévié au niveau de points de déflexion, afin de provoquer un déplacement relatif entre chaque point de déflexion (11, 12, 27) et l'élément de liaison (6).
